# EUROPÄISCHE PATENTSCHRIFT

(11) **EP 4 014 713 B1**
(45) Veröffentlichungstag und Bekanntmachung des Hinweises auf die Patenterteilung: **22.05.2024**
(21) Anmeldenummer: 21213143.7
(22) Anmeldetag: 08.12.2021
(51) Int. Cl.: A01D 45/02, A01D 34/835, A01D 41/14, A01D 43/08

(54) **VORSATZGERÄT MIT SCHNEIDE- UND/ODER FÖRDEREINRICHTUNGEN ZUM SCHNEIDEN VON STÄNGELIGEM ERNTEGUT UND LANDWIRTSCHAFTLICHE ARBEITSMASCHINE MIT EINEM SOLCHEN VORSATZGERÄT**
ATTACHMENT COMPRISING CUTTING AND/OR CONVEYING MEANS FOR CUTTING STALK CROPS AND AGRICULTURAL MACHINE COMPRISING SUCH AN ATTACHMENT
APPAREIL ACCESSOIRE POURVU DE DISPOSITIFS DE COUPE ET/OU DE TRANSPORT PERMETTANT DE COUPER DES PRODUITS DE LA RÉCOLTE SUR TIGE ET MACHINE DE TRAVAIL AGRICOLE DOTÉE D'UN TEL APPAREIL ACCESSOIRE

(30) Priorität: 17.12.2020 DE 102020133931
(43) Veröffentlichungstag der Anmeldung: 22.06.2022
(73) Patentinhaber: Maschinenfabrik Bernard Krone GmbH & Co. KG, 48480 Spelle (DE)
(72) Erfinder: Ester, Markus, 49832 Beesten (DE)

(56) Entgegenhaltungen:
- DE-A1-102004 020 447
- DE-A1-102018 105 858
- DE-A1-102019 116 024
- US-A1- 2016 007 530
- US-B2- 10 398 080

## Beschreibung

Die vorliegende Erfindung betrifft ein Vorsatzgerät mit Schneide- und/oder Fördereinrichtungen zum Schneiden von stängeligem Erntegut, insbesondere Mais, Sorghum oder Grüngut, und zum Zuführen des Ernteguts in eine selbstfahrende Erntemaschine, insbesondere einen Feldhäcksler, wobei das Vorsatzgerät bodenkopierend geführt ist, und die Schneide- und/oder Fördereinrichtungen Schneidelemente aufweisen, welche um eine sich in eine axiale Richtung erstreckende Antriebsachse drehbar, und zum bodennahen Schneiden des Ernteguts eingerichtet sind, wobei das Vorsatzgerät eine Zerkleinerungseinrichtung zum Zerkleinern der am Boden verbliebenen Pflanzenstoppel aufweist. Die Erfindung betrifft weiterhin eine landwirtschaftliche Arbeitsmaschine mit einem solchen Vorsatzgerät.

Solche Vorsatzgeräte werden in der Landwirtschaft in erster Linie zur Ernte von Mais verwendet. Bei der Ernte von Mais verbleiben Stoppeln der Maispflanze im Boden.

Die Raupen des Maiszünslers nutzen die Pflanzenstoppeln als Überwinterungsquartier. Im Frühjahr entwickeln sich die Raupen zu Schmetterlingen und legen Eier an den Blattunterseiten von Maispflanzen ab, sodass sich eine neue Raupengeneration bildet, die sich nach dem Schlüpfen zu den Pflanzenstängeln und von dort Richtung Wurzelwerk der Maispflanze durchfrisst. Die Pflanze wird dabei derart beschädigt, dass sie nicht mehr geerntet werden kann, was zu hohen wirtschaftlichen Verlusten führt.

Eine umweltschonende und chemiefreie Möglichkeit zur Schädlingsbekämpfung des Maiszünslers ist es, die Pflanzenstoppeln derart zu zerkleinern, zerfasern und/oder zerbrechen, dass die bis zu 3 cm langen Raupen nicht mehr in den Stoppeln überwintern können. Dabei ist es besonders vorteilhaft, dass die Stoppeln unmittelbar beim Ernten des Ernteguts zerkleinert werden, so dass sie nicht von Rädern einer Erntemaschine oder eines Transportfahrzeuges umgeknickt werden, da sie dadurch für eine nachträgliche Zerkleinerung nicht mehr zugänglich sind.

Eine selbstfahrende Erntemaschine, insbesondere ein Feldhäcksler, mit einem gattungsgemäßen Vorsatzgerät ist aus der DE 10 2018 105 858 A1 oder aus der DE 10 2004 020 447 B4 bekannt. Das Vorsatzgerät ist mit Einzugs- und Fördereinrichtungen ausgerüstet, die das Erntegut erfassen, abschneiden und einem Arbeitsaggregat, insbesondere einer Häckseleinrichtung, zuführen. Am Vorsatzgerät ist eine dem Verlauf der Bodenoberfläche frei folgende, den Einzugs- und Fördereinrichtungen nachgeordnete Zerschneid- und/oder Zerkleinerungseinrichtung schwenkbar aufgehängt, die zur mechanischen Zerkleinerung der Pflanzenstoppeln nutzbar ist. Die Zerschneid- und/oder Zerkleinerungseinrichtung erstreckt sich über die gesamte Arbeitsbreite des Vorsatzgerätes. Sie erfasst das Restpflanzengut und die Pflanzenstoppeln unabhängig von der Höheneinstellung des Schneidwerks des Vorsatzgerätes.

Aufgabe der Erfindung ist es, ein alternatives und bezüglich der Kosten sowie den Aufwand für die Werkzeuge optimiertes Vorsatzgerät zu schaffen, mit dem eine optimierte Zerkleinerung des Restpflanzenguts und/oder der Pflanzenstoppeln unabhängig von der Höheneinstellung des Schneidwerks des Vorsatzgerätes möglich ist.

Die Aufgabe wird gelöst mit einem Vorsatzgerät mit den Merkmalen des unabhängigen Patentanspruchs 1 und mit einer landwirtschaftlichen Arbeitsmaschine mit den Merkmalen des unabhängigen Patentanspruchs 13. Vorteilhafte Ausführungsformen sind den abhängigen Ansprüchen entnehmbar.

Dafür wird ein Vorsatzgerät geschaffen. Das Vorsatzgerät weist Schneide- und/oder Fördereinrichtungen zum Schneiden von stängeligem Erntegut, wie beispielsweise Mais, Sorghum oder Grüngut, und/oder zum Zuführen des Ernteguts in eine selbstfahrende Erntemaschine auf. Dabei ist die selbstfahrende Erntemaschine bevorzugt ein Feldhäcksler.

Das Vorsatzgerät ist bodenkopierend geführt. Die Schneide- und/oder Fördereinrichtungen weisen Schneidelemente wie beispielsweise Schneidscheiben und/oder Messer auf. Dabei sind die Schneidelemente um eine sich in eine axiale Richtung erstreckende Antriebsachse drehbar, und zum bodennahen Schneiden des Ernteguts eingerichtet.

Um am Boden verbleibende Pflanzenstoppel zu zerkleinern, weist das Vorsatzgerät außerdem eine Zerkleinerungseinrichtung auf.

Das Vorsatzgerät zeichnet sich dadurch aus, dass jedem Schneidelement jeweils eine Zerkleinerungseinrichtung zugeordnet ist. Die Zerkleinerungseinrichtung ist koaxial unterhalb der zugeordneten Schneidscheibe angeordnet. Sie ist reversibel in axialer Richtung relativ zu dem ihr zugeordneten Schneidelement verstellbar.

Da jedem Schneidelement jeweils eine Zerkleinerungseinrichtung zugeordnet ist, die koaxial unterhalb des Schneidelements angeordnet ist, können mit der Zerkleinerungseinrichtung die Pflanzenstoppeln und/oder das Restpflanzengut des jeweils vom Schneidelement geschnittenen Ernteguts zerkleinert, zerfasert und/oder zerbrochen werden. Der Vorteil der reversiblen Verstellbarkeit der Zerkleinerungseinrichtung relativ zu der ihr zugeordneten Schneideinrichtung in axialer Richtung ist, dass sie dabei unebenem Untergrund, kleinen Bodenwellen und/oder Hindernissen, wie beispielsweise Steinen, ausweichen kann. Das Ausweichen der Zerkleinerungseinrichtung erfolgt dabei unabhängig von dem ihr zugeordneten Schneidelement, dem bodenkopierend geführten Vorsatzgerät und/oder einer benachbarten Zerkleinerungseinrichtung. Die Zerkleinerung des Restpflanzenguts und/oder der Pflanzenstoppeln erfolgt somit unabhängig von der Höheneinstellung der Schneidelemente des Vorsatzgerätes.

Da über die Arbeitsbreite des Vorsatzgerätes mehrere Zerkleinerungseinrichtungen vorgesehen sind, die jede für sich einen gegenüber der Arbeitsbreite des Vorsatzgerätes schmalen Bodenbereich bearbeiten, weichen die Zerkleinerungseinrichtungen jeweils in dem schmalen, von ihnen bearbeiteten Bodenbereich den Bodenwellen und/oder Hindernissen optimal aus, so dass das Zerkleinern, Zerfasern und/oder Zerbrechen der Pflanzenstoppeln optimiert bodennah erfolgt.

Da jedem Schneidelement jeweils eine solche Zerkleinerungseinrichtung zugeordnet ist, können die Zerkleinerungseinrichtungen jeweils als modulare Baugruppe, und insbesondere vorgefertigt und/oder nachrüstbar, vorgesehen sein. Dadurch sind Beschaffung, Lagerhaltung und Montage kostengünstig möglich.

Dabei ist es bevorzugt, dass die Zerkleinerungseinrichtung mindestens ein Zerkleinerungswerkzeug aufweist. Es können aber auch mehrere Zerkleinerungswerkzeugs insbesondere in Umfangsrichtung um die Antriebsachse gleichmäßig verteilt vorgesehen sein. Durch das axiale Ausweichen der Zerkleinerungseinrichtung bei unebenem Boden, kleinen Bodenwellen und/oder Hindernissen, taucht das Zerkleinerungswerkzeug weniger häufig und/oder weniger stark in den Boden ein. In einer bevorzugten Ausführungsform ist das Zerkleinerungswerkzeug um eine zur Antriebsachse parallele Befestigungsachse schwenkbar. Dadurch kann es bei Fremdkörperkontakt in eine entgegen einer Umfangsrichtung der Antriebsachse gerichtete Schwenkrichtung ausweichen.

Durch Ausweichen des Zerkleinerungswerkzeugs ist dessen Verschleiß minimiert, sodass eine Standzeit des Zerkleinerungswerkzeugs erhöht ist. Um ein optimales Zerkleinern, Zerfasern und/oder Zerbrechen der Pflanzenstoppeln zu ermöglichen, ist daher ein verschleiß- und/oder reparaturbedingtes Auswechseln des Zerkleinerungswerkzeugs weniger häufig erforderlich. Zudem ist die Ausfallzeit des Vorsatzgerätes dadurch reduziert.

Weiterhin vorteilhaft ist, dass jede der Zerkleinerungseinrichtungen jeweils die Pflanzenstoppeln, die von dem ihnen jeweils zugeordneten Schneidelement geschnitten wurden, mit ihren Zerkleinerungswerkzeugen erfassen kann. Dadurch werden die Pflanzenstoppeln von den Zerkleinerungswerkzeugen zerkleinert, zerfasert und/oder zerbrochen, bevor die Pflanzenstoppel von den Rädern der Erntemaschine oder eines anderen Fahrzeuges, insbesondere eines Transportwagens und/oder Schleppers, überfahren werden.

Dabei ist es bevorzugt, dass die Zerkleinerungseinrichtung von einer bodennahen Position in eine angehobene Position verstellbar ist. Vorzugsweise ist sie nicht nur in ihrer bodennahen, sondern kontinuierlich auch während des Anhebens sowie in ihrer angehobenen Position angetrieben. Dadurch werden die Pflanzenstoppeln trotz Hindernissen, Bodenwellen und/oder Unebenheiten optimal zerstört. Da jedem Schneidelement jeweils eine solche Zerkleinerungseinrichtung zugeordnet ist, erfolgt die bodennahe Zerkleinerung der Pflanzenstoppeln dabei über die gesamte Arbeitsbreite des Vorsatzgerätes.

Die Zerkleinerungseinrichtung weist vorzugsweise ein nach außen gewölbtes Abstützelement zum Abstützen am Boden auf. Besonders bevorzugt ist dabei mindestens ein Zerkleinerungswerkzeug in axialer Richtung oberhalb des Abstützelementes angeordnet. Durch die gewölbte Form des Abstützelementes kann die Zerkleinerungseinrichtung schonend angehoben werden.

Vorzugsweise ist die Wölbung des Abstützelements dabei so bemessen, dass das Zerkleinerungswerkzeug trotz der Hindernisse, Bodenwellen und/oder Unebenheiten weitgehend ohne Bodenkontakt betreibbar ist. Dabei wird das Eindringen des wenigstens einen Zerkleinerungswerkzeugs bei Bodenkontakt durch die axial nachgiebige Abstützung verhindert. Durch die axial nachgiebige Abstützung kann auch das Zerkleinerungswerkzeug bei Kontakt mit einem Hindernis ausweichen. Vorteilhaft ist auch, dass durch die gewölbte Form des Abstützelements ein Widerstand, der beim Entlangführen der Zerkleinerungseinrichtung über dem Boden wirkt, minimiert ist. Da die Zerkleinerungseinrichtung nicht in den Boden eindringt, ist ein für sie erforderliches Drehmoment zudem gering.

In einer bevorzugten Ausführungsform sind das Schneidelement und die Zerkleinerungseinrichtung um eine gemeinsame Antriebsachse drehbar. Dabei ist es besonders bevorzugt, dass das Schneidelement und die Zerkleinerungseinrichtung gemeinsam in eine Umfangsrichtung angetrieben sind. Weiterhin bevorzugt wird für den Antrieb dasselbe Antriebselement genutzt. Durch den gemeinsamen Antrieb ist die Anzahl an Antriebsbauteilen gering, sodass die Kosten optimiert sind. Ferner kann dadurch die Drehzahl des Schneidelements und der Zerkleinerungseinrichtung synchron vorgesehen sein.

Vorzugsweise ist weiterhin ein äußerer Abstand des Zerkleinerungswerkzeugs in radialer Richtung von der Antriebsachse kleiner als ein Radius des ihm zugeordneten Schneidelements. Durch den kleineren Radius schneidet das Schneidelement das Erntegut bevor es von dem Zerkleinerungswerkzeug erfasst wird. Außerdem ist dadurch sichergestellt, dass Zerkleinerungswerkzeuge benachbarter Zerkleinerungseinrichtungen nicht in Kontakt zueinander geraten. Dabei ist der äußere Abstand bevorzugt dennoch so bemessen, dass alle Pflanzenstoppel des durch das zugeordnete Schneidelement jeweils geschnittenen Ernteguts mit dem Zerkleinerungswerkzeug erfasst und zerkleinert wird.

Die Zerkleinerungseinrichtung ist bevorzugt gegen die Kraft einer Feder in axialer Richtung verstellbar. Dadurch kann die Zerkleinerungseinrichtung Unebenheiten, Bodenwellen und/oder Hindernissen, wie beispielsweise Steinen, ausweichen. Beim Ausweichen wird die Zerkleinerungseinrichtung von der bodennahen Position in axialer Richtung gegen die Kraft der Feder in die angehobene Position verstellt. Dadurch wird die Zerkleinerungseinrichtung nach dem Ausweichvorgang mit der Kraft der Feder selbsttätig in die bodennahe Position zurückverstellt. Dadurch wird das Zerkleinerungswerkzeug immer optimal bodennah geführt. Somit ist ein bodennahes Zerkleinern der Pflanzenstoppel, auch bei unebenem Boden, Bodenwellen und/oder Hindernissen, möglich.

In einer bevorzugten Ausführungsform ist ein Anheben der Zerkleinerungseinrichtung in axialer Richtung durch ein Anschlagmittel begrenzt. Besonders bevorzugt ist dabei ein Spaltabstand zwischen der Schneidscheibe und dem Zerkleinerungswerkzeug durch Verstellen und/oder Austauschen des Anschlagmittels einstellbar.

Die Aufgabe wird weiterhin gelöst mit einer landwirtschaftlichen Arbeitsmaschine mit einem solchen Vorsatzgerät. Die landwirtschaftliche Arbeitsmaschine weist bevorzugt wenigstens ein Arbeitsaggregat zum Verarbeiten des Ernteguts auf. Vorzugsweise ist das Arbeitsaggregat ein Häckselaggregat zum Häckseln des Ernteguts. In dieser Ausführungsform ist die landwirtschaftliche Arbeitsmaschine bevorzugt ein Feldhäcksler.

Mit der Zerkleinerungseinrichtung kann ein bodennahes Zerkleinern der Pflanzenstoppel kostengünstig und werkzeugschonend erfolgen, wobei die Standzeit der Zerkleinerungswerkzeuge optimiert ist.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) schematisch einen Teil eines erfindungsgemäßen Vorsatzgerätes; und
- Fig. 2: einen schematischen Ausschnitt des Vorsatzgerätes der Fig. 1, und zwar in (a) in einer, eine Unterseite und Vorderseite des Vorsatzgerätes zeigenden perspektivischen Ansicht und in (b) in einer, eine Vorderseite des Vorsatzgerätes zeigenden Frontansicht.

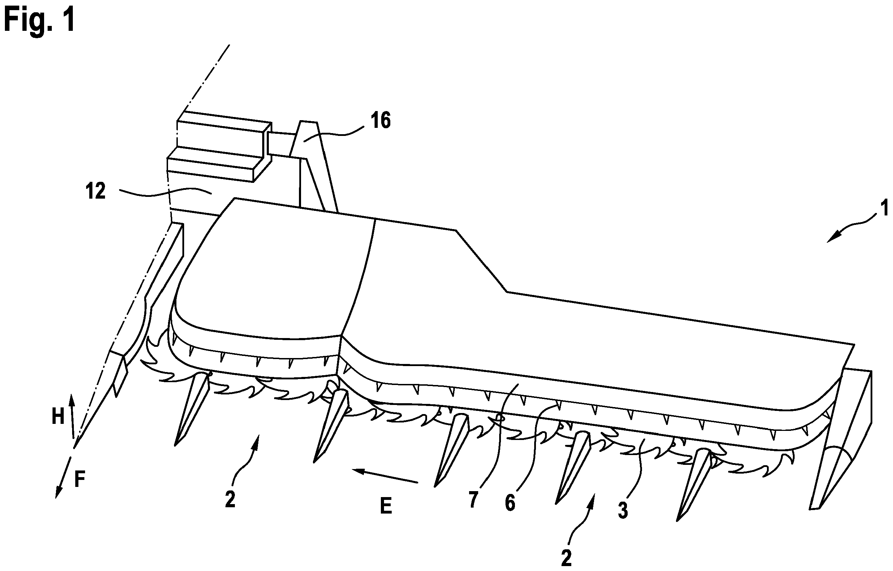

Fig. 1 zeigt ein Teil eines erfindungsgemäßen Vorsatzgerätes 1 zur Ernte von stängeligem Erntegut, wie beispielsweise Mais oder Sorghum. Dargestellt ist eine ausgehend von der Zeichenebene rechte Hälfte des Vorsatzgerätes 1. Eine zu dieser spiegelbildlich ausgebildete linke Hälfte des Vorsatzgerätes 1 ist hier nicht dargestellt.

Solch ein Vorsatzgerät 1 kann an einer Frontseite einer selbstfahrenden Erntemaschine (nicht dargestellt), wie beispielsweise einem Feldhäcksler, angeordnet, und in einer Fahrt- und Arbeitsrichtung F betrieben sein. Dabei kann es der selbstfahrenden Erntemaschine stängeliges Erntegut (nicht dargestellt) über einen dafür vorgesehenen Kanalanschluss 12 an der Rückseite des Vorsatzgerätes 1 zuführen. Das Vorsatzgerät 1 ist hier mittels einer beispielhaften Ausführungsform eines Verbindungsrahmens 16 mit der Erntemaschine verbindbar.

Alternativ kann das Vorsatzgerät 1 auch an einer Frontseite eines Schleppers angeordnet, und in einer vorwärts gerichteten Fahrtrichtung des Schleppers betrieben sein. Weiterhin kann das Vorsatzgerät 1 an einer Heckseite eines Schleppers angeordnet, und in einer rückwärts gerichteten Fahrtrichtung des Schleppers betrieben sein.

Außerdem kann zwischen dem Vorsatzgerät 1 und dem Schlepper eine landwirtschaftliche Arbeitsmaschine angeordnet sein, der das Vorsatzgerät 1 das Erntegut zuführt.

Die Begriffe selbstfahrende Erntemaschine, Schlepper und landwirtschaftliche Arbeitsmaschine werden daher im Folgenden synonym verwendet.

Das Vorsatzgerät 1 weist Schneid- und/oder Fördereinrichtungen 2 auf. Diese sind zu einer Mittelebene (nicht bezeichnet), die durch eine sich in Fahrt- und Arbeitsrichtung F des Vorsatzgerätes 1 erstreckende Linie und eine sich quer zur Fahrt- und Arbeitsrichtung erstreckende, insbesondere vertikale Linie H aufgespannt ist, spiegelbildlich, und/oder gleichmäßig auf eine Arbeitsbreite des Vorsatzgerätes 1 verteilt angeordnet, sind. Die Schneid- und/oder Fördereinrichtungen 2 sind dazu vorgesehen, das stängelige Erntegut zu schneiden und in eine Förderrichtung E zu fördern. Dabei ist die Förderrichtung E der jeweiligen Schneid- und/oder Fördereinrichtungen 2 zur Mittelebene und/oder zum Kanalanschluss 12 hin gerichtet.

Die selbstfahrende Erntemaschine umfasst regelmäßig ein Arbeitsaggregat zum Einziehen und Fördern des Ernteguts in einen Förderkanal und/oder zum Verarbeiten, insbesondere Zerkleinern, des Ernteguts und/oder zum Beschleunigen des Ernteguts. Das Arbeitsaggregat kann dabei beispielsweise ein Einzugsaggregat, Häckselaggregat, Konditionierer, Nachbeschleuniger und/oder Gebläse sein. Die selbstfahrende Erntemaschine kann auch regelmäßig eine Auswurfeinrichtung, wie beispielsweise einen Auswurfkrümmer, zum Überladen des Ernteguts auf einen Transportwagen aufweisen. Dabei kann die Auswurfeinrichtung ein Auswurfelement aufweisen, mit dem ein Auftreffpunkt des Ernteguts im Transportwagen einstellbar ist.

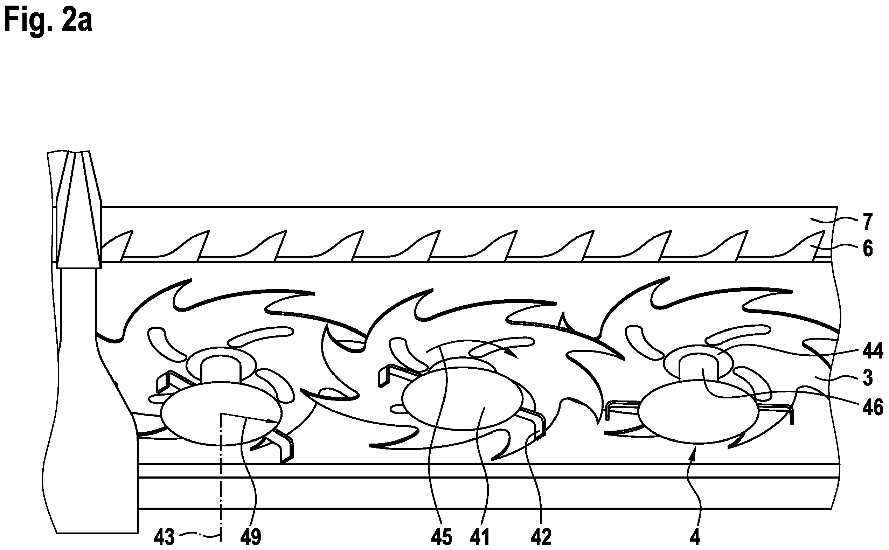

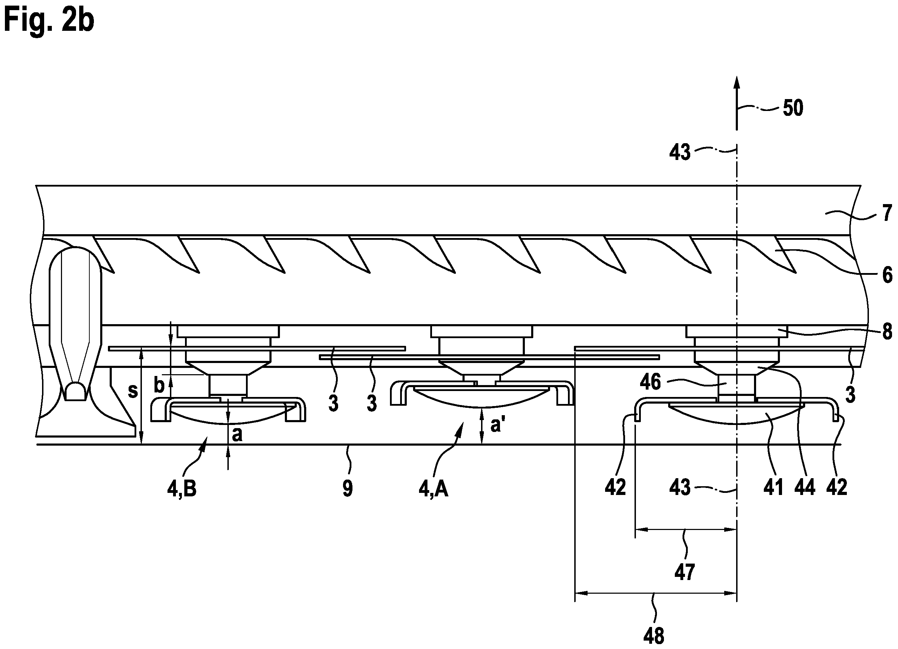

Fig. 2 zeigt einen schematischen Ausschnitt des Vorsatzgerätes 1 der Fig. 1, und zwar in (a) in einer, eine Unterseite und Vorderseite des Vorsatzgerätes 1 zeigenden perspektivischen Ansicht und in (b) in einer, eine Vorderseite des Vorsatzgerätes 1 zeigenden Frontansicht.

Dargestellt ist ein vergrößerter Ausschnitt der Schneide- und/oder Fördereinrichtung 2. Diese weist mehrere Schneidelemente 3 auf, die zum Schneiden des stängeligen Ernteguts vorgesehen sind. Zudem weist sie ein Förderelement 7 zum Fördern des Ernteguts in die Förderrichtung E auf. Das Förderelement 7 ist hier als eine umlaufende und/oder endlose Förderkette ausgebildet. Es weist eine Vielzahl Mitnehmer 6 auf. Das Förderelement 7 kann alternativ aber auch als Förderband, eine Förderwalze, ein Förderrad oder eine Förderschnecke ausgebildet sein. Weiterhin können auch Fördertrommeln, die koaxial zu den Schneidelementen 3 drehbar sind, als Förderelemente dienen.

Mehrere Schneidelemente 3 sind an einer zum Boden 9 gerichteten Unterseite des Vorsatzgerätes 1 unterhalb der Förderelemente 7 über die Arbeitsbreite des Vorsatzgerätes 1 gleichmäßig verteilt angeordnet. Sie überdecken dabei etwa die Arbeitsbreite des Vorsatzgerätes 1. Dadurch ist ein Schneiden von stängeligem Erntegut über die nahezu vollständige oder sogar vollständige Arbeitsbreite des Vorsatzgerätes 1 möglich.

Das Schneidelement 3 ist hier als eine Schneidscheibe ausgebildet, die mehrere am Umfang der Schneidscheibe verteilt angeordnete sichelförmige Schneiden aufweist. Im Folgenden werden daher die Begriffe Schneidelement 3 und Schneidscheibe synonym verwendet. Es kann aber auch statt einer Schneidscheibe 3 ein anderes rotierendes Element mit Messern und/oder anders geformten Schneiden verwendet werden.

Dabei hat es sich als vorteilhaft erwiesen, dass die Schneidscheibe 3 von ihrer benachbarten Schneidscheibe 3 in axialer Richtung 50 einen geringfügigen Schneidenabstand (nicht bezeichnet) aufweist. Denkbar ist aber auch, dass die Schneidscheiben 3 in axialer Richtung 50 keinen Abstand zueinander aufweisen. Weiterhin hat es sich als vorteilhaft erwiesen, dass die Schneidscheibe 3 von ihrer benachbarten Schneidscheibe 3 in radialer Richtung 49 einen Achsabstand (nicht bezeichnet) zwischen benachbarten Zerkleinerungseinrichtungen 4 aufweist, der kleiner als ein Radius 48 der Schneidscheiben 3 ist. Dadurch ist jede Schneidscheibe 3 von ihrer benachbarten Schneidscheibe 3 zumindest geringfügig überdeckt. Im Folgenden werden die Schneide- und/oder Fördereinrichtungen 2 anhand eines einzelnen Schneidelements 3 beschrieben.

Die Schneidscheibe 3 wird zum Schneiden des Ernteguts von einem Antriebselement 8 in eine Umfangsrichtung 45 um eine Antriebsachse 43 angetrieben. Beim Schneiden des stängeligen Ernteguts verbleiben Reste des Ernteguts in Form von Pflanzenstoppeln im Boden 9. Zum Zerkleinern der Pflanzenstoppeln ist in axialer Richtung 50 unterhalb der Schneidscheibe 3 eine Zerkleinerungseinrichtung 4 koaxial zur Antriebsachse 43 angeordnet. Die Zerkleinerungseinrichtung 4 ist der Schneidscheibe 3 zugeordnet. Die Zerkleinerungseinrichtung 4 ist hier an einer gemeinsamen Antriebswelle 46 der Schneidscheibe 3 angeordnet. Sie dreht sich dabei gemeinsam mit der ihr zugeordneten Schneidscheibe 3 um die Antriebsachse 43 in die Umfangsrichtung 45. Dabei sind die Zerkleinerungseinrichtung 4 und die Schneidscheibe 3 von einem gemeinsamen Antriebselement 8 angetrieben. Ein solches Antriebselement 8 kann beispielsweise ein Getriebe, ein Aggregat und/oder ein Motor sein.

Die Zerkleinerungseinrichtung 4 ist dabei in axialer Richtung 50 gegen eine Rückstellkraft verstellbar. Dabei kann die Rückstellkraft beispielswiese durch eine Feder (nicht dargestellt) erfolgen. Dabei wird die Zerkleinerungseinrichtung 4 von einer bodennahen Position B in eine angehobene Position A verstellt. Mit Hilfe der Rückstellkraft und/oder der Gewichtskraft der Zerkleinerungseinrichtung 4 wird diese selbsttätig von der angehobenen Position A in die bodennahe Position B zurückgestellt. Dadurch ist ein bodennahes Zerkleinern, Zerfasern und/oder Zerbrechen der Pflanzenstoppeln möglich. Durch ein Anschlagmittel 44 kann das Verstellen der Zerkleinerungseinrichtung 4 in axialer Richtung 50 begrenzt sein.

Zum Zerkleinern der Pflanzenstoppel weist die Zerkleinerungseinrichtung 4 ein Zerkleinerungswerkzeug 42 auf. Es können auch mehrere Zerkleinerungswerkzeuge 42 in Umfangsrichtung 45 gleichmäßig verteilt vorgesehen sein. Ein äußerer Abstand 47 des Zerkleinerungswerkzeugs 42 in radialer Richtung 49 von der Antriebsachse 43 ist kleiner als ein Radius 48 des ihm zugeordneten Schneidelements 3 und/oder kleiner als der Achsabstand zwischen benachbarten Zerkleinerungseinrichtungen 4. Dadurch gerät das Zerkleinerungswerkzeug 42 nicht in Kontakt zu einem Zerkleinerungswerkzeug 42 einer benachbarten Zerkleinerungseinrichtung 4.

Besonders vorteilhaft ist, wenn das Zerkleinerungswerkzeug 42 einen Freilauf aufweist, der insbesondere in eine der Umfangsrichtung 45 entgegengesetzte Drehrichtung wirkt.

Dabei weist das Zerkleinerungswerkzeug 42 in einer vorteilhaften Ausführungsform jeweils ein stumpfes Ende auf, mit dem Pflanzenstoppel derart zerkleinert, zerfasert und/oder zerbrochen werden, dass die Raupen des Maiszünsler in den Pflanzenstoppeln keinen Überwinterungsraum mehr auffinden. Hier ist das Zerkleinerungswerkzeug 42 als ein Winkelblech ausgebildet. Diese Ausführungsform stellt eine besonders kostengünstige und/oder leicht zu beschaffende Variante eines Zerkleinerungswerkzeugs 42 dar. Es hat sich aber auch erwiesen, dass andere Ausführungsformen als Zerkleinerungswerkzeug 42 verwendbar sind, wie beispielsweise ein konisch oder rund geformtes Zerkleinerungswerkzeug.

Ferner weist die Zerkleinerungseinrichtung 4 ein, insbesondere nach außen, gewölbtes Abstützelement 41 auf. Dieses ist an einer Unterseite der Zerkleinerungseinrichtung 4, in axialer Richtung 50 unterhalb der Zerkleinerungswerkzeuge 42 angeordnet. Dadurch wird das Zerkleinerungswerkzeug 42, auch wenn es auf eine Bodenunebenheit trifft, werkzeugschonend oberhalb des Bodens 9 geführt. Dabei wird ein Eintauchen des Zerkleinerungswerkzeugs 42 in den Boden 9 durch die axial nachgiebige Abstützung verhindert. Das Zerkleinerungswerkzeug 42 ist daher einem geringen Verschleiß ausgesetzt und weist eine hohe Standzeit auf. Statt eines gewölbten Abstützelements 41 sind andere Abstützelemente 41 verwendbar, wie beispielsweise ein tellerförmiges Abstützelement. In einer weiteren vorteilhaften Ausführungsform kann sich das Abstützelement 41 auch weiter als das Zerkleinerungswerkzeug 42 oder ebenso weit wie das Zerkleinerungswerkzeug 42 in Richtung zum Boden 9 hin erstrecken.

Die Höhe, die die Pflanzenstoppel aus dem Boden 9 herausragen entspricht etwa einer Schnitthöhe s, die sich aus dem Abstand der Schneidscheibe 3 vom Boden 9 ergibt. Sie ist durch ein Anheben und/oder Absenken des Vorsatzgerätes 1 einstellbar. Dadurch ist die Schnitthöhe s nahezu gleichbleibend, sodass beim Betrieb auch bei Bodenunebenheiten und/oder Hindernissen nahezu gleichhohe Pflanzenstoppel im Boden verbleiben. Indem der Bodenabstand a der Zerkleinerungseinrichtung 4 an die Schnitthöhe s angepasst wird, ist eine Höhe, in der die Pflanzenstoppel zerkleinert, zerfasert und/oder zerbrochen werden, einstellbar. Dabei ist die Zerkleinerungseinrichtung 4 mit Hilfe der Rückstellkraft selbsttätig in die bodennahe Position zurückverstellbar. Dadurch wird das Zerkleinerungswerkzeug 42 immer optimal bodennah geführt. Somit ist ein bodennahes Zerkleinern der Pflanzenstoppel, auch bei unebenem Boden, Bodenwellen und/oder Hindernissen, unabhängig von der eingestellten Schnitthöhe s möglich.

## Patentansprüche

1. Vorsatzgerät (1) mit Schneide- und/oder Fördereinrichtungen (2) zum Schneiden von stängeligem Erntegut, insbesondere Mais, Sorghum oder Grüngut, und/oder zum Zuführen des Ernteguts in eine selbstfahrende Erntemaschine, insbesondere einen Feldhäcksler, wobei das Vorsatzgerät (1) bodenkopierend geführt ist, und die Schneide- und/oder Fördereinrichtungen (2) Schneidelemente (3) aufweisen, welche um eine sich in eine axiale Richtung (50) erstreckende Antriebsachse (43) drehbar, und zum bodennahen Schneiden des Ernteguts eingerichtet sind, wobei das Vorsatzgerät (1) eine Zerkleinerungseinrichtung (4) zum Zerkleinern der am Boden (9) verbliebenen Pflanzenstoppel aufweist,
**dadurch gekennzeichnet, dass**
jedem Schneidelement (3) jeweils eine Zerkleinerungseinrichtung (4) zugeordnet ist, die koaxial unterhalb dieser angeordnet ist, und wobei
die Zerkleinerungseinrichtung (4) reversibel in axialer Richtung (50) relativ zu dem ihr zugeordneten Schneidelement (3) verstellbar ist.

2. Vorsatzgerät (1) nach Anspruch 1, **dadurch gekennzeichnet, dass** die Zerkleinerungseinrichtung (4) mindestens ein Zerkleinerungswerkzeug (42) aufweist.

3. Vorsatzgerät (1) nach einem der vorherigen Ansprüche, **dadurch gekennzeichnet, dass** die Zerkleinerungseinrichtung (4) ein nach außen gewölbtes Abstützelement (41) zum Abstützen am Boden (9) aufweist.

4. Vorsatzgerät (1) nach Anspruch 3, **dadurch gekennzeichnet, dass** mindestens ein Zerkleinerungswerkzeug (42) oberhalb des Abstützelementes (41) angeordnet ist.

5. Vorsatzgerät (1) nach einem der Ansprüche 2 - 4, **dadurch gekennzeichnet, dass** das Schneidelement (3) und das Zerkleinerungswerkzeug (42) um eine gemeinsame Antriebsachse (43) drehbar ist.

6. Vorsatzgerät (1) nach einem der vorherigen Ansprüche, **dadurch gekennzeichnet, dass** das Schneidelement (3) und die Zerkleinerungseinrichtung (4) gemeinsam in einer Umfangsrichtung (45) angetrieben sind.

7. Vorsatzgerät (1) nach einem der Ansprüche 2 - 6, **dadurch gekennzeichnet, dass** mehrere solche Zerkleinerungswerkzeuge (42) in Umfangsrichtung (45) um die Antriebsachse (43) gleichmäßig verteilt angeordnet sind.

8. Vorsatzgerät (1) nach einem der vorherigen Ansprüche, **dadurch gekennzeichnet, dass** die Zerkleinerungseinrichtung (4) einen Freilauf, insbesondere entgegen der Umfangsrichtung (45), aufweist.

9. Vorsatzgerät (1) nach einem der Ansprüche 2 - 8, **dadurch gekennzeichnet, dass** ein äußerer Abstand (47) des Zerkleinerungswerkzeugs (42) in radialer Richtung (49) von der Antriebsachse (43) kleiner als ein Radius (48) des ihm zugeordneten Schneidelements (3) ist.

10. Vorsatzgerät (1) nach einem der Ansprüche 2 - 9, **dadurch gekennzeichnet, dass** das Zerkleinerungswerkzeug (42) um eine zur Antriebsachse (43) parallele Befestigungsachse schwenkbar ist.

11. Vorsatzgerät (1) nach einem der vorherigen Ansprüche, **dadurch gekennzeichnet, dass** die Zerkleinerungseinrichtung (4) gegen die Kraft einer Feder reversibel in axialer Richtung (50) relativ zu dem ihr zugeordneten Schneidelement (3) verstellbar ist.

12. Vorsatzgerät (1) nach einem der vorherigen Ansprüche, **dadurch gekennzeichnet, dass** ein Anheben der Zerkleinerungseinrichtung (4) in die axiale Richtung (50) durch ein Anschlagmittel (44) begrenzt ist.

13. Landwirtschaftliche Arbeitsmaschine, insbesondere Feldhäcksler, mit einem Vorsatzgerät (1) nach einem der vorherigen Ansprüche.

## Claims

1. Attachment unit (1) having cutting and/or conveying devices (2) for cutting stalk crops, in particular maize, sorghum or vegetation, and/or for feeding the crop into a self-propelled harvesting machine, in particular a forage harvester, the attachment unit (1) being guided so as to follow the ground, and the cutting and/or conveying devices (2) comprising cutting elements (3) which are rotatable about a drive axis (43) extending in an axial direction (50), and are arranged for cutting the crop close to the ground, the attachment unit (1) comprising a shredding device (4) for shredding the plant stubble that is left on the ground (9),
**characterized in that**
each cutting element (3) is associated with a shredding device (4) which is arranged coaxially below said cutting element, and
the shredding device (4) being reversibly adjustable in the axial direction (50) relative to the cutting element (3) associated therewith.

2. Attachment unit (1) according to claim 1, **characterized in that** the shredding device (4) comprises at least one shredding tool (42).

3. Attachment unit (1) according to either of the preceding claims, **characterized in that** the shredding device (4) comprises an outwardly curved support element (41) for support on the ground (9).

4. Attachment unit (1) according to claim 3, **characterized in that** at least one shredding tool (42) is arranged above the support element (41).

5. Attachment unit (1) according to any of claims 2 to 4,
**characterized in that** the cutting element (3) and the shredding tool (42) can be rotated about a common drive axis (43).

6. Attachment unit (1) according to any of the preceding claims, **characterized in that** the cutting element (3) and the shredding device (4) are jointly driven in a circumferential direction (45).

7. Attachment unit (1) according to any of claims 2 to 6, **characterized in that** a plurality of such shredding tools (42) are arranged so as to be uniformly distributed around the drive axis (43) in the circumferential direction (45).

8. Attachment unit (1) according to any of the preceding claims,
**characterized in that** the shredding device (4) turns freely, in particular counter to the circumferential direction (45).

9. Attachment unit (1) according to any of claims 2 to 8,
**characterized in that** an outer distance (47) of the shredding tool (42) in the radial direction (49) from the drive axis (43) is smaller than a radius (48) of the cutting element (3) associated with the shredding tool.

10. Attachment unit (1) according to any of claims 2 to 9,
**characterized in that** the shredding tool (42) is pivotable about a fastening axis which is parallel to the drive axis (43).

11. Attachment unit (1) according to any of the preceding claims, **characterized in that** the shredding device (4) is reversibly adjustable, counter to the force of a spring, in the axial direction (50) relative to the cutting element (3) associated therewith.

12. Attachment unit (1) according to any of the preceding claims, **characterized in that** lifting of the shredding device (4) in the axial direction (50) is delimited by a stop means (44).

13. Agricultural working machine, in particular a forage harvester, having an attachment unit (1) according to any of the preceding claims.

## Revendications

1. Equipement frontal (1) comportant des installations de coupe et/ou de transfert (2) pour couper des produits de récolte en tiges notamment maïs, Sorgho et végétaux et/ou pour alimenter en produits de récolte une récolteuse automotrice notamment une ensileuse,
- l'équipement frontal (1) est guidé en suivant le sol et les installations de coupe et/ou de transfert (2) comportent des éléments de coupe (3) tournant autour d'un axe d'entraînement (43) orienté dans une direction axiale (50) et qui sont installés pour couper le produit de récolte à proximité du sol,
- l'équipement frontal (1) comporte un broyeur (4) pour broyer les chaumes qui subsistent sur le sol (9),
équipement frontal **caractérisé en ce que**
un broyeur (4) est associé à chaque élément de coupe (3), en dessous duquel ce broyeur est installé coaxialement, et
- le broyeur (4) est réglable de manière réversible dans une direction axiale (50) par rapport à l'élément de coupe (3) associé.

2. Equipement frontal (1) selon la revendication 1,
**caractérisé en ce que**
le broyeur (4) comporte au moins un outil de broyage (42).

3. Equipement frontal (1) selon l'une des revendications précédentes, **caractérisé en ce que**
le broyeur (4) comporte un élément d'appui (41) bombé convexe pour s'appuyer sur le sol (9).

4. Equipement frontal (1) selon la revendication 3,
**caractérisé par**
au moins un outil de broyage (42) installé au-dessus de l'élément d'appui (41).

5. Equipement frontal (1) selon l'une des revendications 2 à 4, **caractérisé en ce que**
l'élément de coupe (3) et l'outil de broyage (42) tournent autour d'un axe d'entraînement (43) commun.

6. Equipement frontal (1) selon l'une des revendications précédentes, **caractérisé en ce que**
l'outil de coupe (3) et le broyeur (4) sont entraînés en commun dans une direction périphérique (45).

7. Equipement frontal (1) selon l'une des revendications 2 à 6, **caractérisé en ce que**
plusieurs outils de broyage (42) sont répartis régulièrement dans la direction périphérique (45) autour de l'axe d'entraînement (43).

8. Equipement frontal (1) selon l'une des revendications précédentes, **caractérisé en ce que**
le broyeur (4) a un mouvement de roue libre notamment opposé à la direction périphérique (45).

9. Equipement frontal (1) selon l'une des revendications 2 à 8, **caractérisé par**
un écart extérieur (47) du broyeur (42) dans la direction radiale (49) par rapport à l'axe d'entraînement (43) qui est inférieur au rayon (48) de l'élément de coupe (3) associé.

10. Equipement frontal (1) selon l'une des revendications 2 à 9, **caractérisé en ce que**
le broyeur (42) peut pivoter autour d'un axe de fixation parallèle à l'axe d'entraînement (43).

11. Equipement frontal (1) selon l'une des revendications précédentes, **caractérisé en ce que**
le broyeur (4) est réglable contre la force d'un ressort, de manière réversible dans la direction axiale (50) par rapport à l'élément de coupe (3) qui lui est associé.

12. Equipement frontal (1) selon l'une des revendications précédentes, **caractérisé en ce que**
le soulèvement du broyeur (4) dans la direction axiale (50) est limité par une butée (44).

13. Machine agricole notamment ensileuse comportant un équipement frontal (1) selon l'une des revendications précédentes.
